# EUROPEAN PATENT APPLICATION

(11) **EP 4 080 942 A1**
(43) Date of publication of application: **26.10.2022**
(21) Application number: 20913043.4
(22) Date of filing: 27.10.2020
(51) Int. Cl.: H04W 52/02

(54) **BASE STATION CONTROL METHOD, OPERATIONS SUPPORT SYSTEM (OSS), AND DISTRIBUTED BASE STATION SYSTEM (DBS)**

(30) Priority: 09.01.2020 CN 202010023039
(71) Applicant: Huawei Digital Power Technologies Co., Ltd., Shenzhen, Guangdong 518043 (CN)
(72) Inventor: GONG, Lanping, Shenzhen, Guangdong 518129 (CN); YE, Wanxiang, Shenzhen, Guangdong 518129 (CN); WEI, Gang, Shenzhen, Guangdong 518129 (CN)
(74) Representative: Maiwald Patent- und Rechtsanwaltsgesellschaft mbH
(86) International application number: PCT/CN2020/123872
(87) International publication number: WO 2021/139323

(57) **Abstract**

Embodiments of this application provide a base station control method, an operations support system OSS, and a distributed base station system DBS, to optimize power supply control on a base station through cooperative working of the OSS, the base station, and a power supply in the DBS, reduce electric energy consumption of the base station, and reduce operating expenses OPEX of the base station. In the base station control method, if first running data of a first base station unit that is in a power-on state or a wake-up state in the base station indicates that the first base station unit is in a low bearing capacity state, the OSS controls the first base station unit to enter a power-off state or a sleep state, so that energy consumption control on the base station can be optimized.

## Description

This application claims priority to Chinese Patent Application No. 202010023039.0, filed with the China National Intellectual Property Administration on January 9, 2020 and entitled "BASE STATION CONTROL METHOD, OPERATIONS SUPPORT SYSTEM OSS, AND DISTRIBUTED BASE STATION SYSTEM DBS", which is incorporated herein by reference in its entirety.

### TECHNICAL FIELD

This application relates to the wireless communication field, and in particular, to a base station control method, an operations support system OSS, and a distributed base station system DBS.

### BACKGROUND

A base station is a form of a radio station, and is a radio transceiver station that transmits information to a mobile phone terminal in a specified radio coverage area by using a mobile communication switching center. With the development of wireless communication technologies from 2G, 3G, and 4G to 5G, network communication standards are also continuously evolving, and a requirement for a bearing capacity of a base station in a communication network is also increasingly high.

In a conventional technology, the base station may enhance the bearing capacity of the base station through wireless coverage of multi-standard networking, for example, multi-band and multi-standard access is supported in a single station, and even a plurality of different operators share a same station. The base station needs to implement multi-standard networking by adding an apparatus such as a transceiver (TRX, transceiver) and a power amplifier (PA, power amplifier).

However, because a quantity of power consumption apparatuses such as a TRX channel and the PA in the base station is increased, electric energy consumption of the base station is greatly increased. Consequently, operating expenses (OPEX, operational expenses) of the base station are further greatly increased.

### SUMMARY

Embodiments of this application provide a base station control method, an operations support system (OSS, operations support system) and a distributed base station system (DBS, distributed base station system), to optimize power supply control on a base station through cooperative working of the OSS, the base station, and a power supply in the DBS, reduce electric energy consumption of the base station, and reduce operating expenses OPEX of the base station.

A first aspect of embodiments of this application provides a base station control method, used to optimize power supply control on a base station. The base station may implement multi-standard networking by adding an apparatus such as a TRX and a PA to the base station, to enhance a bearing capacity of the base station. To optimize power supply control on the base station, the base station control method includes: An operations support system OSS obtains first running data of a first base station unit in the base station, where the first base station unit is in a first state, the first state includes a power-on state or a wake-up state, and the first running data may be used to reflect a bearing capacity state of the first base station unit; the OSS determines, based on the first running data, whether the first base station unit is in a low bearing capacity state; and if the first base station unit is in the low bearing capacity state, the OSS controls the first base station unit to enter a second state, where the second state includes a power-off state or a sleep state. Specifically, if the first running data of the first base station unit that is in the power-on state or the wake-up state in the base station indicates that the first base station unit is in the low bearing capacity state, the OSS controls the first base station unit to enter the power-off state or the sleep state. In other words, power supply control on the base station is optimized through cooperative working of the OSS, the base station, and a power supply in a DBS, to be specific, the first base station unit in the low bearing capacity state is controlled to enter the power-off state or the sleep state from the power-on state or the wake-up state, to reduce electric energy consumption of the base station, and reduce operating expenses OPEX of the base station.

It should be noted that the base station generally includes a remote radio unit (RRU, remote radio unit), an active antenna unit (AAU, active antenna unit), a baseband unit (BBU, baseband unit), a distributed unit (DU, distributed unit), a centralized unit (CU, centralized unit), and the like. For example, the base station may be divided into base station units based on different frequency bands. The first base station unit may include, in the base station, a combination of an RRU and a BBU corresponding to any frequency band in a 4G network standard, a combination of an RRU, an AAU, and a BBU corresponding to any frequency band in a 4G network standard, a combination of an AAU, a DU, and a CU corresponding to any frequency band in a 5G network standard, and another combination in another network standard. This is not limited herein.

In a possible implementation of the first aspect of embodiments of this application, the first running data may include key performance indicator (KPI, key performance indicator) data of the first base station unit. In this case, that the OSS determines, based on the first running data, whether the first base station unit is in a low bearing capacity state includes: The OSS determines whether the KPI data is lower than a first preset threshold; and if the KPI data is lower than the first preset threshold, the OSS determines that the first base station unit is in the low bearing capacity state; or if the KPI data is not lower than the first preset threshold, the OSS determines that the first base station unit is not in the low bearing capacity state. The first preset threshold may be set by using experience of an on-site working person. Alternatively, the first preset threshold may be determined in an artificial intelligence (AI, artificial intelligence) self-learning manner, or may be determined in another manner. This is not limited herein.

In this embodiment, the OSS may determine, by using the KPI data of the first base station unit and the first preset threshold, whether the first base station unit is in the low bearing capacity state. The KPI data may include a quantity of connected mode users, uplink physical resource block (PRB, physical resource block) utilization, downlink PRB utilization, and the like of a cell. The KPI data of the first base station unit may directly reflect the bearing capacity state of the first base station unit. This provides a specific implementation for obtaining the first running data, and increases implementability of the solution.

In a possible implementation of the first aspect of embodiments of this application, the first running data may alternatively include a power supply parameter of the first base station unit. In this case, that the OSS determines, based on the first running data, whether the first base station unit is in a low bearing capacity state includes: The OSS determines whether the power supply parameter is lower than a second preset threshold; and if the power supply parameter is lower than the second preset threshold, the OSS determines that the first base station unit is in the low bearing capacity state; or if the power supply parameter is not lower than the second preset threshold, the OSS determines that the first base station unit is not in the low bearing capacity state. Similarly, the second preset threshold may be set by using experience of an on-site working person. Alternatively, the second preset threshold may be determined in an AI self-learning manner, or may be determined in another manner. This is not limited herein.

In this embodiment, the OSS may determine, by using the power supply parameter of the first base station unit and the second preset threshold, whether the first base station unit is in the low bearing capacity state. The bearing capacity state of the first base station unit may be indirectly reflected by using the power supply parameter of the first base station unit, for example, reflected by using the power supply parameter such as a current, a voltage, and an electrical power of a first base station power supply. This provides another specific implementation for obtaining the first running data, and further increases implementability of the solution.

In a possible implementation of the first aspect of embodiments of this application, when the OSS determines that the first base station unit is in the low bearing capacity state, the method may further include: The OSS determines whether a terminal connected to the first base station unit meets a preset condition; and if the terminal connected to the first base station unit meets the preset condition, the OSS triggers the step of controlling the first base station unit to enter a second state.

In this embodiment, when determining that the first base station unit is in the low bearing capacity state, the OSS may further perform determining for the terminal accessing the first base station unit, that is, determine whether the terminal meets the preset condition. For example, the preset condition may be whether the terminal does not carry a special identifier or whether the terminal is performing a delay-insensitive service. Only when determining that the terminal meets the preset condition, the OSS triggers the step of controlling the first base station unit to enter a second state, to prevent a user of the terminal connected to the first base station unit from being affected when power supply control on the base station is optimized.

In a possible implementation of the first aspect of embodiments of this application, the base station may further include a second base station unit in the first state. After the OSS controls the first base station unit to enter the second state, the method may further include: The OSS obtains second running data of the second base station unit, where the second running data is used to reflect a bearing capacity state of the second base station unit; the OSS determines, based on the second running data, whether the second base station unit is in the low bearing capacity state; and if the second base station unit is in the low bearing capacity state, the OSS controls the second base station unit to enter the second state. Similarly, the second base station unit may include a frequency band in the base station that is different from a frequency band corresponding to the first base station unit, a combination of an RRU and a BBU corresponding to any frequency band in the 4G network standard, a combination of an RRU, an AAU, and a BBU corresponding to any frequency band in the 4G network standard, a combination of an AAU, a DU, and a CU corresponding to any frequency band in the 5G network standard, and another combination in another network standard. This is not limited herein.

In this embodiment, after controlling the first base station unit to enter the second state, the OSS may further obtain the second running data of the second base station unit, and when determining, based on the second running data, that the second base station unit is in the low bearing capacity state, control the second base station unit to enter the second state, that is, control the second base station unit to enter the power-off state or the sleep state. The second base station unit may be a base station unit still in the first state in the base station. Therefore, the OSS may traverse all base station units in the first state in the base station, and control a base station unit in the low bearing capacity state in the base station units in the first state in the base station to enter the second state, to further reduce power consumption of the base station. In addition, a specified frequency band is generally set as a basic coverage frequency band in the base station. When the second base station unit corresponds to the basic coverage frequency band, the OSS may not control the second base station unit to enter the second state, so that a basic access capability of the base station can be maintained.

In a possible implementation of the first aspect of embodiments of this application, the base station may further include a third base station unit in the first state. After the OSS controls the first base station unit to enter the second state, that is, after the OSS controls, when the first base station unit is in the low bearing capacity state, the first base station unit to be powered off or sleep, subsequently, when a bearing capacity of another base station unit in the base station is excessively high, the OSS may control the first base station unit to enter the first state to share running corresponding to the bearing capacity. In this case, the method may further include: The OSS obtains third running data of the third base station unit, where the third running data is used to reflect a bearing capacity state of the third base station unit; the OSS determines, based on the third running data, whether the third base station unit is in a high bearing capacity state; and if the third base station unit is in the high bearing capacity state, the OSS controls the first base station unit to enter the first state. Similarly, the third base station unit may include any frequency band in the base station that is different from frequency bands corresponding to the first base station unit and the second base station unit, a combination of an RRU and a BBU corresponding to any frequency band in the 4G network standard, a combination of an RRU, an AAU, and a BBU corresponding to any frequency band in the 4G network standard, a combination of an AAU, a DU, and a CU corresponding to any frequency band in the 5G network standard, and another combination in another network standard. This is not limited herein.

In this embodiment, after controlling, when the first base station unit is in the low bearing capacity state, the first base station unit to be powered off or sleep, subsequently, when a bearing capacity of the third base station unit in the first state in the base station is excessively high, the OSS may control the first base station unit to enter the first state to share running corresponding to the bearing capacity, so that power supply control on the base station is further optimized.

A second aspect of embodiments of this application provides a distributed base station system DBS, used to optimize power supply control on a base station. The base station may implement multi-standard networking by adding an apparatus such as a TRX and a PA to the base station, to enhance a bearing capacity of the base station. Power supply control on the base station may be optimized by using the DBS. The DBS includes a power supply, a base station, and an operations support system OSS. The base station includes a first base station unit. The first base station unit is in a first state. The first state includes a power-on state or a wake-up state. The power supply is connected to the first base station unit, and is configured to supply power to the first base station unit. In addition, the OSS is separately connected to the power supply and the first base station unit, and is configured to: when determining, based on running data of the first base station unit, that the first base station unit is in a low bearing capacity state, control a power supply state of the power supply supplying power to the first base station unit to enter a second state. The second state includes a power-off state or a sleep state. The first running data is used to reflect a bearing capacity state of the first base station unit. Specifically, when the OSS in the DBS determines that the first running data of the first base station unit that is in the power-on state or the wake-up state in the base station indicates that the first base station unit is in the low bearing capacity state, the OSS controls the first base station unit to enter the power-off state or the sleep state. In other words, power supply control on the base station is optimized through cooperative working of the OSS, the base station, and the power supply in the DBS, to be specific, the first base station unit in the low bearing capacity state is controlled to enter the power-off state or the sleep state from the power-on state or the wake-up state, to reduce electric energy consumption of the base station, and reduce operating expenses OPEX of the base station.

It should be noted that the base station generally includes an RRU, an AAU, a BBU, a CU, a DU, and the like. For example, the base station may be divided into base station units based on different frequency bands. The first base station unit may include, in the base station, a combination of an RRU and a BBU corresponding to any frequency band in a 4G network standard, a combination of an RRU, an AAU, and a BBU corresponding to any frequency band in a 4G network standard, a combination of an AAU, a DU, and a CU corresponding to any frequency band in a 5G network standard, and another combination in another network standard. This is not limited herein.

In a possible implementation of the second aspect of embodiments of this application, the base station further includes a second base station unit in the first state. The power supply is connected to the second base station unit, and is configured to supply power to the second base station unit. In addition, the OSS is connected to the second base station unit, and is configured to: after controlling the power supply state of the power supply supplying power to the first base station unit to enter the second state, when determining, based on running data of the second base station unit, that the second base station unit is in the low bearing capacity state, control a power supply state of the power supply supplying power to the second base station unit to enter the second state. The second running data is used to reflect a bearing capacity state of the second base station unit. Similarly, the second base station unit may include any frequency band in the base station that is different from a frequency band corresponding to the first base station unit, a combination of an RRU and a BBU corresponding to any frequency band in the 4G network standard, a combination of an RRU, an AAU, and a BBU corresponding to any frequency band in the 4G network standard, a combination of an AAU, a DU, and a CU corresponding to any frequency band in the 5G network standard, and another combination in another network standard. This is not limited herein.

In this embodiment, after the OSS in the DBS controls the first base station unit to enter the second state, when determining, based on the second running data, that the second base station unit is in the low bearing capacity state, the OSS may further control the second base station unit to enter the second state, that is, control the second base station unit to enter the power-off state or the sleep state. The second base station unit may be a base station unit still in the first state in the base station. Therefore, the OSS may traverse all base station units in the first state in the base station, and control a base station unit in the low bearing capacity state in the base station units in the first state in the base station to enter the second state, to further reduce power consumption of the base station. In addition, a specified frequency band is generally set as a basic coverage frequency band in the base station. When the second base station unit corresponds to the basic coverage frequency band, the OSS may not control the second base station unit to enter the second state, so that a basic access capability of the base station can be maintained.

In a possible implementation of the second aspect of embodiments of this application, the base station may further include a third base station unit in the first state. The power supply is connected to the third base station unit, and is configured to supply power to the third base station unit. In addition, the OSS is connected to the third base station unit, and is configured to: after controlling the power supply state of the power supply supplying power to the first base station unit to enter the second state, when determining, based on running data of the third base station unit, that the third base station unit is in a high bearing capacity state, control the power supply state of the power supply supplying power to the first base station unit to enter the first state. The third running data is used to reflect a bearing capacity state of the third base station unit. Similarly, the third base station unit may include any frequency band in the base station that is different from frequency bands corresponding to the first base station unit and the second base station unit, a combination of an RRU and a BBU corresponding to any frequency band in the 4G network standard, a combination of an RRU, an AAU, and a BBU corresponding to any frequency band in the 4G network standard, a combination of an AAU, a DU, and a CU corresponding to any frequency band in the 5G network standard, and another combination in another network standard. This is not limited herein.

In this embodiment, after controlling, when the first base station unit is in the low bearing capacity state, the first base station unit to be powered off or sleep, subsequently, when a bearing capacity of the third base station unit in the first state in the base station is excessively high, the OSS may control the first base station unit to enter the first state to share running corresponding to the bearing capacity, so that power supply control on the base station is further optimized.

In a possible implementation of the second aspect of embodiments of this application, the first running data of the first base station unit includes key performance indicator KPI data of the first base station unit and/or a power supply parameter of the first base station unit.

In this embodiment, the first running data may include the KPI data of the first base station unit and/or the power supply parameter of the first base station unit. The KPI of the first base station unit and/or the power supply parameter of the first base station unit may directly or indirectly reflect the bearing capacity state of the first base station unit. This provides a specific implementation for obtaining the first running data, and increases implementability of the solution.

A third aspect of embodiments of this application provides an operations support system OSS, where the OSS has a function of implementing the method according to any one of the first aspect or the possible implementations of the first aspect. The function may be implemented by hardware, or may be implemented by hardware executing corresponding software. The hardware or software includes one or more modules corresponding to the foregoing function, for example, an obtaining unit, a determining unit, and a control unit.

A fourth aspect of embodiments of this application provides an operations support system OSS. The OSS includes at least one processor, a memory, a communication port, and computer-executable instructions that are stored in the memory and that can be executed on the processor. When the computer-executable instructions are executed by the processor, the processor performs the method according to any one of the first aspect or the possible implementations of the first aspect.

A fifth aspect of this application provides a computer-readable storage medium storing one or more computer-executable instructions. When the computer-executable instructions are executed by a processor, the processor performs the method according to any one of the first aspect or the possible implementations of the first aspect.

A sixth aspect of this application provides a computer program product storing one or more computer-executable instructions. When the computer-executable instructions are executed by a processor, the processor performs the method according to any one of the first aspect or the possible implementations of the first aspect.

A seventh aspect of this application provides a chip system. The chip system includes a processor configured to support a controller in implementing the function in any one of the second aspect or the possible implementations of the second aspect. In a possible design, the chip system may further include a memory. The memory is configured to store necessary program instructions and data. The chip system may include a chip, or may include a chip and another discrete component.

For technical effects brought by any one of the third aspect to the seventh aspect or the possible implementations of the second aspect to the fifth aspect, refer to the technical effects brought by the first aspect or the different possible implementations of the first aspect. Details are not described herein again.

It can be learned from the foregoing technical solutions that embodiments of this application have the following advantages: The operations support system OSS obtains the first running data of the first base station unit in the base station, where the first base station unit is in the first state, and the first state includes the power-on state or the wake-up state; the OSS determines, based on the first running data, whether the first base station unit is in the low bearing capacity state; and if the first base station unit is in the low bearing capacity state, the OSS controls the first base station unit to enter the second state, where the second state includes the power-off state or the sleep state. When the first running data of the first base station unit that is in the power-on state or the wake-up state in the base station meets a first preset condition, where the first preset condition indicates that the base station is in the low bearing capacity state, the OSS controls the first base station unit to enter the power-off state or the sleep state, so that energy consumption control on the base station can be optimized.

### BRIEF DESCRIPTION OF DRAWINGS

FIG. 1 is a schematic diagram of an application scenario according to an embodiment of this application;
FIG. 2 is a schematic diagram of a distributed base station system according to an embodiment of this application;
FIG. 3 is another schematic diagram of a distributed base station system according to an embodiment of this application;
FIG. 4 is a schematic diagram of a base station control method according to an embodiment of this application;
FIG. 5 is another schematic diagram of a base station control method according to an embodiment of this application;
FIG. 6 is another schematic diagram of a base station control method according to an embodiment of this application;
FIG. 7 is a schematic diagram of an operations support system OSS according to an embodiment of this application; and
FIG. 8 is another schematic diagram of an operations support system OSS according to an embodiment of this application.

### DESCRIPTION OF EMBODIMENTS

Embodiments of this application provide a base station control method, an operations support system OSS, and a distributed base station system DBS, to optimize power supply control on a base station through cooperative working of the OSS, the base station, and a power supply in the DBS, reduce electric energy consumption of the base station, and reduce operating expenses OPEX of the base station.

With the development of wireless communication technologies from 2G, 3G, and 4G to 5G, network communication standards are also continuously evolving, and a requirement for a bearing capacity of a base station in a communication network is also increasingly high. In a conventional technology, the base station may enhance the bearing capacity of the base station through wireless coverage of multi-standard networking, for example, multi-band and multi-standard access is supported in a single station, and even a plurality of different operators share a same station. Multi-band means that one base station supports wireless communication on at least two single frequency bands defined in 3GPP, and multi-standard means that one base station supports wireless communication in at least two of a 2G network standard, a 3G network standard, a 4G network standard, and a 5G network standard. The base station needs to implement multi-standard networking by adding an apparatus such as a TRX and a PA. However, because a quantity of power consumption apparatuses such as a TRX channel and the PA in the base station is increased, electric energy consumption of the base station is greatly increased. Consequently, operating expenses OPEX of the base station are further greatly increased. In an existing base station architecture, the base station may be directly connected to a power supply. An existing energy saving solution is that an on-site working person reduces electric energy consumption by controlling the base station to be powered off, that is, the on-site working person may reduce electric energy consumption by controlling, by using the power supply, the base station to be powered off. Clearly, a disadvantage exists in this energy saving manner, that is, all terminal devices accessing the base station may be disconnected due to power-off of the base station, and user experience of the terminals is poor. In embodiments of this application, the existing base station architecture is improved and optimized to resolve the problem.

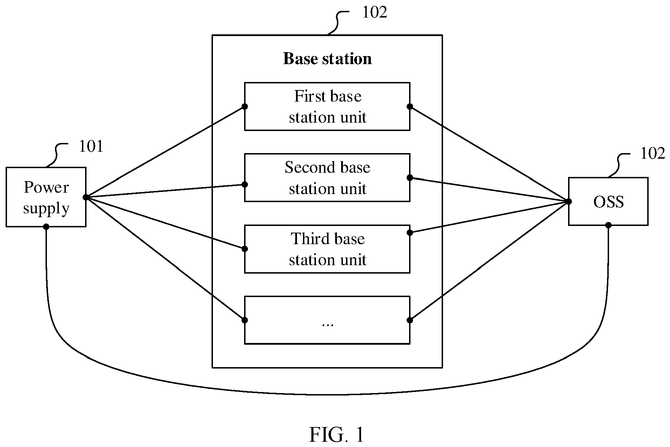

Referring to FIG. 1, an embodiment of this application provides a distributed base station system DBS, including a power supply 101, a base station 102, and an operations support system OSS 103. The base station 102 may generally include an RRU, an AAU, a BBU, a CU, a DU, and the like. The base station 102 may be divided into base station units based on different frequency bands. The RRU, the AAU, the BBU, the DU, the CU that are in the base station 102 and that correspond to different frequency bands may form different base station units. The base station may include a first base station unit, a second base station unit, a third base station unit, and the like. For example, frequency bands corresponding to different network standards are generally different. The base station may be divided into units based on different network standards. The first base station unit may include a part (frequency bands of 1880 MHz to 1900 MHz and 2010 MHz to 2025 MHz) that is in the base station and that supports communication in a 3G network standard. The second base station unit may include a part (frequency bands of 1880 MHz to 1900 MHz, 2320 MHz to 2370 MHz, and 2575 MHz to 2635 MHz) that is in the base station and that supports communication in a 4G network standard. The third base station unit may include a part (frequency bands of 3300 MHz to 3400 MHz, 3400 MHz to 3600 MHz, and 4800 MHz to 5000 MHz) that is in the base station and that supports communication in a 5G network standard. Alternatively, the base station may be divided into units based on different frequency bands in a same network standard. The first base station unit may include a part (a frequency band of 1880 MHz to 1900 MHz) that is in the base station and that supports communication in a 4G network standard. The second base station unit may include a part (a frequency band of 2320 MHz to 2370 MHz) that is in the base station and that supports communication in the 4G network standard. The third base station unit may include a part (a frequency band of 2575 MHz to 2635 MHz) that is in the base station and that supports communication in the 4G network standard. Alternatively, the base station may be divided into units in different network standards to obtain a plurality of base station units corresponding to different frequency bands. In addition, in an implementation process, different base station units may be combined by different architectures. The first base station unit is used as an example. The first base station unit may include a combination of an RRU and a BBU corresponding to any frequency band in the 4G network standard, a combination of an RRU, an AAU, and a BBU corresponding to any frequency band in the 4G network standard, a combination of an AAU, a DU, and a CU corresponding to any frequency band in the 5G network standard, and another combination in another network standard. This is not limited herein. In this embodiment and subsequent embodiments, that different base station units include combinations of RRUs and BBUs corresponding to different frequency bands in the 4G network standard is only used as an example. In addition, the OSS 103 may be integrated on the power supply 101, or may be integrated on the base station 102, or may be independent of the power supply 101 and the base station 102. This is not limited herein.

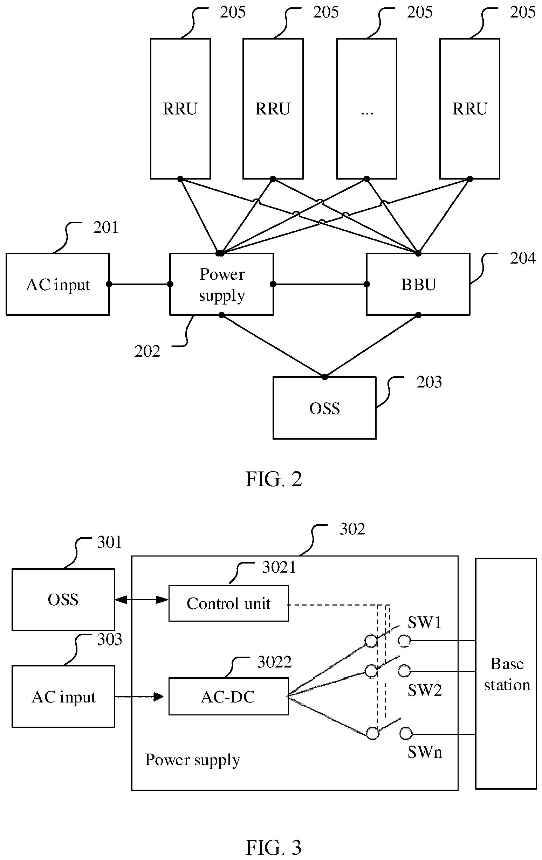

Based on the DBS architecture in FIG. 1, FIG. 2 shows a specific embodiment of a DBS in a specific implementation process according to an embodiment of this application. In a running process of the DBS, specifically, an alternating current (AC, alternating current) input 201 may provide an original power supply for a power supply 202, and then supply power to a BBU 204 and an RRU 205 in a base station. The base station may include a first base station unit, a second base station unit, a third base station unit, and the like. In addition, an operations support system OSS 203 is separately connected to the power supply 202 and the BBU 204 and the RRU 205 in the base station. Clearly, in this embodiment and subsequent embodiments, the AC input 201 is merely an example, and a direct current input or another power input may alternatively supply power to the power supply 202. This is not limited herein.

Based on the embodiment of the DBS provided in FIG. 2, an internal implementation of the power supply 202 may be further expanded. Referring to FIG. 3, the DBS includes an OSS 301, a power supply 302, an AC input 303, and a base station 304. For example, in an implementation process, the power supply 302 may include a control unit 3021 that is connected to the OSS 301, and at least one AC-direct current (DC, direct current) 3022 that is connected to the AC input 303. The control unit 3021 may control, by using at least one switch (SW, switch), a power supply state of the AC-DC 3022 supplying power to the base station. In addition, the SW may be configured by using the control unit through hardware or software. This is not limited herein.

Based on the DBS implementation embodiments described in FIG. 1 to FIG. 3, the following describes a control process of the DBS. In a process of optimizing power supply control on the base station, the base station includes at least a first base station unit. The first base station unit is in a first state. The first state includes a power-on state or a wake-up state. The power supply is connected to the first base station unit, and is configured to supply power to the first base station unit. In addition, the OSS is separately connected to the power supply and the first base station unit, and is configured to: when determining, based on running data of the first base station unit, that the first base station unit is in a low bearing capacity state, control a power supply state of the power supply supplying power to the first base station unit to enter a second state. The second state includes a power-off state or a sleep state. Specifically, when the OSS in the DBS determines that the first running data of the first base station unit that is in the power-on state or the wake-up state in the base station indicates that the first base station unit is in the low bearing capacity state, the OSS controls the first base station unit to enter the power-off state or the sleep state. In other words, power supply control on the base station is optimized through cooperative working of the OSS, the base station, and the power supply in the DBS, to be specific, the first base station unit in the low bearing capacity state is controlled to enter the power-off state or the sleep state from the power-on state or the wake-up state, to reduce electric energy consumption of the base station, and reduce operating expenses OPEX of the base station.

In a preferred implementation, the base station may further include a second base station unit in the first state. The power supply is connected to the second base station unit, and is configured to supply power to the second base station unit. In addition, the OSS is connected to the second base station unit, and is configured to: after controlling the power supply state of the power supply supplying power to the first base station unit to enter the second state, when determining, based on running data of the second base station unit, that the second base station unit is in the low bearing capacity state, control a power supply state of the power supply supplying power to the second base station unit to enter the second state. In this embodiment, the OSS may traverse all base station units in the first state in the base station, and control a base station unit in the low bearing capacity state in the base station units in the first state in the base station to enter the second state, to further reduce power consumption of the base station. In addition, a specified frequency band is generally set as a basic coverage frequency band in the base station. When the second base station unit corresponds to the basic coverage frequency band, the OSS may not control the second base station unit to enter the second state, so that a basic access capability of the base station can be maintained.

In a preferred implementation, the base station may further include a third base station unit in the first state. The power supply is connected to the third base station unit, and is configured to supply power to the third base station unit. In addition, the OSS is connected to the third base station unit, and is configured to: after controlling the power supply state of the power supply supplying power to the first base station unit to enter the second state, when determining, based on running data of the third base station unit, that the third base station unit is in a high bearing capacity state, control the power supply state of the power supply supplying power to the first base station unit to enter the first state. Similarly, the third base station unit may be a third base station unit corresponding to any frequency band that is different from that of the first base station unit in the base station. In this embodiment, after controlling, when the first base station unit is in the low bearing capacity state, the first base station unit to be powered off or sleep, subsequently, when a bearing capacity of the third base station unit in the first state in the base station is excessively high, the OSS may control the first base station unit to enter the first state to share running corresponding to the bearing capacity, so that power supply control on the base station is further optimized.

In a preferred implementation, the first running data of the first base station unit includes key performance indicator KPI data of the first base station unit and/or a power supply parameter of the first base station unit. In this embodiment, the KPI of the first base station unit and/or the power supply parameter of the first base station unit may directly or indirectly reflect the bearing capacity state of the first base station unit. This provides a specific implementation for obtaining the first running data, and increases implementability of the solution.

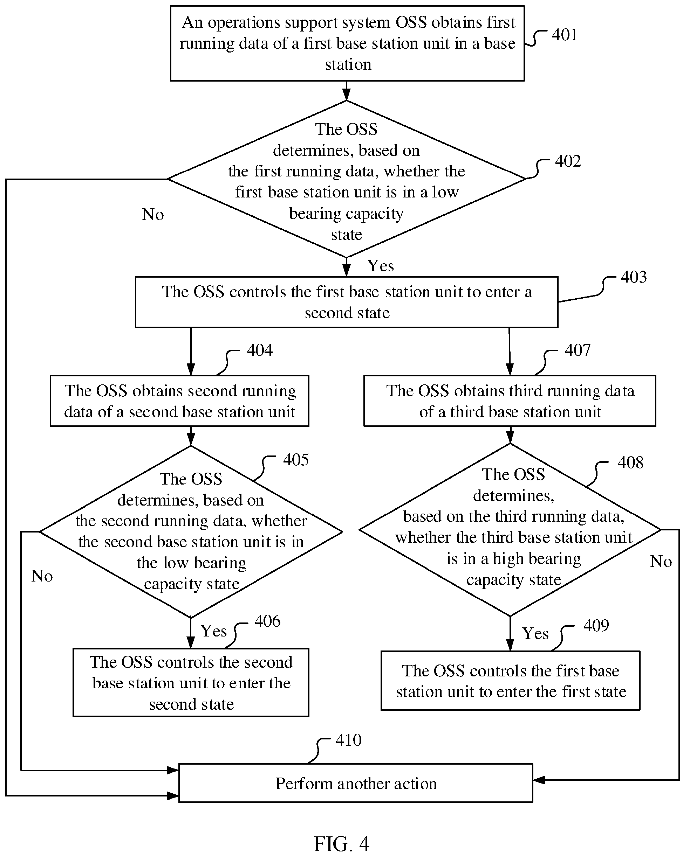

The foregoing describes the distributed base station system DBS in embodiments of this application. The following describes, from a perspective of the operations support system OSS in the DBS, a method implemented by the OSS. Referring to FIG. 4, an embodiment of a base station control method in an embodiment of this application includes:
401. An operations support system OSS obtains first running data of a first base station unit in a base station.

In this embodiment, the operations support system OSS obtains the first running data of the first base station unit in the first state in the base station. The first state includes a power-on state or a wake-up state, and the first running data is used to reflect a bearing capacity state of the first base station unit.

Specifically, an RRU and a BBU that are in the base station and that correspond to different frequency bands may form different base station units. The base station includes at least the first base station unit. The first base station unit is in the first state, that is, the first base station unit is in the power-on state or the wake-up state. In this case, the OSS obtains the first running data that is used to reflect the bearing capacity state of the first base station unit.

402. The OSS determines, based on the first running data, whether the first base station unit is in a low bearing capacity state; and performs step 403 if the first base station unit is in the low bearing capacity state; or performs step 410 if the first base station unit is not in the low bearing capacity state.

In this embodiment, the OSS determines, based on the first running data obtained in step 401, whether the first base station unit is in the low bearing capacity state. Specifically, a corresponding determining policy may be set based on a data characteristic of the first running data. The following is described in detail:
(1) The first running data includes key performance indicator KPI data of the first base station unit. In this case, that the OSS determines, based on the first running data, whether the first base station unit is in a low bearing capacity state includes: The OSS determines whether the KPI data is lower than a first preset threshold; and if the KPI data is lower than the first preset threshold, the OSS determines that the first base station unit is in the low bearing capacity state; or if the KPI data is not lower than the first preset threshold, the OSS determines that the first base station unit is not in the low bearing capacity state. The first preset threshold may be set by using experience of an on-site working person. Alternatively, the first preset threshold may be determined in an AI self-learning manner, or may be determined in another manner. This is not limited herein.
   In this embodiment, the OSS may determine, by using the KPI data of the first base station unit and the first preset threshold, whether the first base station unit is in the low bearing capacity state. The KPI data may include a quantity of connected mode users, uplink PRB utilization, downlink PRB utilization, and the like of a cell. The KPI data of the first base station unit may directly reflect the bearing capacity state of the first base station unit. This provides a specific implementation for obtaining the first running data, and increases implementability of the solution.
(2) The first running data includes a power supply parameter of the first base station unit. In this case, that the OSS determines, based on the first running data, whether the first base station unit is in a low bearing capacity state includes: The OSS determines whether the power supply parameter is lower than a second preset threshold; and if the power supply parameter is lower than the second preset threshold, the OSS determines that the first base station unit is in the low bearing capacity state; or if the power supply parameter is not lower than the second preset threshold, the OSS determines that the first base station unit is not in the low bearing capacity state. Similarly, the second preset threshold may be set by using experience of an on-site working person. Alternatively, the second preset threshold may be determined in an AI self-learning manner, or may be determined in another manner. This is not limited herein.

In this embodiment, the OSS may determine, by using the power supply parameter of the first base station unit and the second preset threshold, whether the first base station unit is in the low bearing capacity state. The bearing capacity state of the first base station unit may be indirectly reflected by using the power supply parameter of the first base station unit, for example, reflected by using the power supply parameter such as a current, a voltage, and an electrical power of a first base station power supply. This provides another specific implementation for obtaining the first running data, and further increases implementability of the solution.

403. The OSS controls the first base station unit to enter a second state.

In this embodiment, when determining, in step 402, that the first base station unit is in the low bearing capacity state, the OSS controls the first base station unit to enter the second state. The second state includes a power-off state or a sleep state.

Specifically, when the first running data of the first base station unit that is in the power-on state or the wake-up state in the base station meets a first preset condition, where the first preset condition indicates that the base station is in the low bearing capacity state, the OSS controls the first base station unit to enter the power-off state or the sleep state, so that energy consumption control on the base station can be optimized.

In addition, when the OSS determines, in step 402, that the first base station unit is in the low bearing capacity state, before the OSS controls, in step 403, the first base station unit to enter the second state, the OSS further includes: The OSS determines whether a terminal connected to the first base station unit meets a preset condition; and if the terminal connected to the first base station unit meets the preset condition, the OSS triggers the step of controlling the first base station unit to enter a second state. When determining that the first base station unit is in the low bearing capacity state, the OSS may further perform determining for the terminal accessing the first base station unit, that is, determine whether the terminal meets the preset condition. For example, the preset condition may be whether the terminal does not carry a special identifier or whether the terminal is performing a delay-insensitive service. Only when determining that the terminal meets the preset condition, the OSS triggers the step of controlling the first base station unit to enter a second state, to prevent a user of the terminal connected to the first base station unit from being affected when power supply control on the base station is optimized.

In this embodiment, after the OSS performs step 403, the OSS may further optimize power supply control on the base station. The base station further includes a second base station unit in the first state. After the OSS controls, in step 403, the first base station unit to enter the second state, the method may further include:
404. The OSS obtains second running data of the second base station unit.

In this embodiment, the OSS obtains the second running data of the second base station unit. The second running data is used to reflect a bearing capacity state of the second base station unit.

Similar to the first base station unit, the second base station unit in this embodiment may include an RRU and a BBU corresponding to any frequency band that is different from that of the first base station unit in the base station.

405. The OSS determines, based on the second running data, whether the second base station unit is in the low bearing capacity state; and performs step 406 if the second base station unit is in the low bearing capacity state; or performs step 410 if the second base station unit is not in the low bearing capacity state.

In this embodiment, the OSS determines, based on the second running data obtained in step 404, whether the second base station unit is in the low bearing capacity state. For a process in which the OSS performs determining based on the second running data, refer to the foregoing process in which the OSS performs determining based on the first running data in step 402. Details are not described herein again.

406. The OSS controls the second base station unit to enter the second state.

In this embodiment, when the OSS determines, in step 405, that the second base station unit is in the low bearing capacity state, the OSS controls the second base station unit to enter the second state.

Specifically, after controlling the first base station unit to enter the second state, the OSS may further obtain the second running data of the second base station unit, and when determining, based on the second running data, that the second base station unit is in the low bearing capacity state, control the second base station unit to enter the second state, that is, control the second base station unit to enter the power-off state or the sleep state. The second base station unit may be a base station unit still in the first state in the base station. Therefore, the OSS may traverse all base station units in the first state in the base station, and control a base station unit in the low bearing capacity state in the base station units in the first state in the base station to enter the second state, to further reduce power consumption of the base station. In addition, a specified frequency band is generally set as a basic coverage frequency band in the base station. When the second base station unit corresponds to the basic coverage frequency band, the OSS may not control the second base station unit to enter the second state, so that a basic access capability of the base station can be maintained.

In this embodiment, after the OSS performs step 403, the OSS may further optimize power supply control on the base station. The base station further includes a third base station unit in the first state. After the OSS controls the first base station unit to enter the second state, the method may further include:

407. The OSS obtains third running data of the third base station unit.

In this embodiment, the OSS obtains the third running data of the third base station unit. The third running data is used to reflect a bearing capacity state of the third base station unit, and the third base station unit is in the first state, that is, the third base station unit is in the power-on state or the wake-up state.

Similar to the first base station unit, the third base station unit in this embodiment may include an RRU and a BBU corresponding to any frequency band that is different from that of the first base station unit and that of the second base station unit in the base station.

408. The OSS determines, based on the third running data, whether the third base station unit is in a high bearing capacity state; and performs step 409 if the third base station unit is in the high bearing capacity state; or performs step 410 if the third base station unit is not in the high bearing capacity state.

In this embodiment, the OSS determines, based on the third running data obtained in step 407, whether the third base station unit is in the high bearing capacity state. Specifically, a corresponding determining policy may be set based on a data characteristic of the third running data. Similarly, the third running data may include KPI data, a power supply parameter, and the like of the third base station unit. Subsequently, the OSS determines, by setting a corresponding high threshold, whether the third base station unit is in the high bearing capacity state; and performs step 409 if the third base station unit is in the high bearing capacity state; or performs step 410 if the third base station unit is not in the high bearing capacity state. The high threshold may be set by using experience of an on-site working person. Alternatively, the high threshold may be determined in an AI self-learning manner, or may be determined in another manner. This is not limited herein.

409. If the third base station unit is in the high bearing capacity state, the OSS controls the first base station unit to enter the first state.

In this embodiment, the base station may further include the third base station unit in the first state. After the OSS controls the first base station unit to enter the second state, that is, after the OSS controls, when the first base station unit is in the low bearing capacity state, the first base station unit to be powered off or sleep, subsequently, when a bearing capacity of the third base station unit in the first state in the base station is excessively high, the OSS may control the first base station unit to enter the first state to share running corresponding to the bearing capacity, so that power supply control on the base station is further optimized.

410. Perform another operation.

In this embodiment, when the OSS determines, in step 402, that the first base station unit is not in the low bearing capacity state, when the OSS determines, in step 405, that the second base station unit is not in the low bearing capacity state, or when the OSS determines, in step 408, that the third base station unit is not in the high bearing capacity state, the OSS performs another operation. In this case, the OSS may not perform another action, or the OSS may periodically continuously perform a determining process in step 402, step 405, and/or step 408. This is not limited herein.

In embodiments of this application, in the embodiment shown in FIG. 4, the OSS controls, in step 401 to step 406, each unit in the base station to enter the second state (the power-off state or the sleep state), and the OSS controls, in step 407 to step 409, each unit in the base station to enter the first state (the power-on state or the wake-up state). The following describes the two cases by using another embodiment.
1. Control a base station unit in the base station to adjust from the first state to the second state.

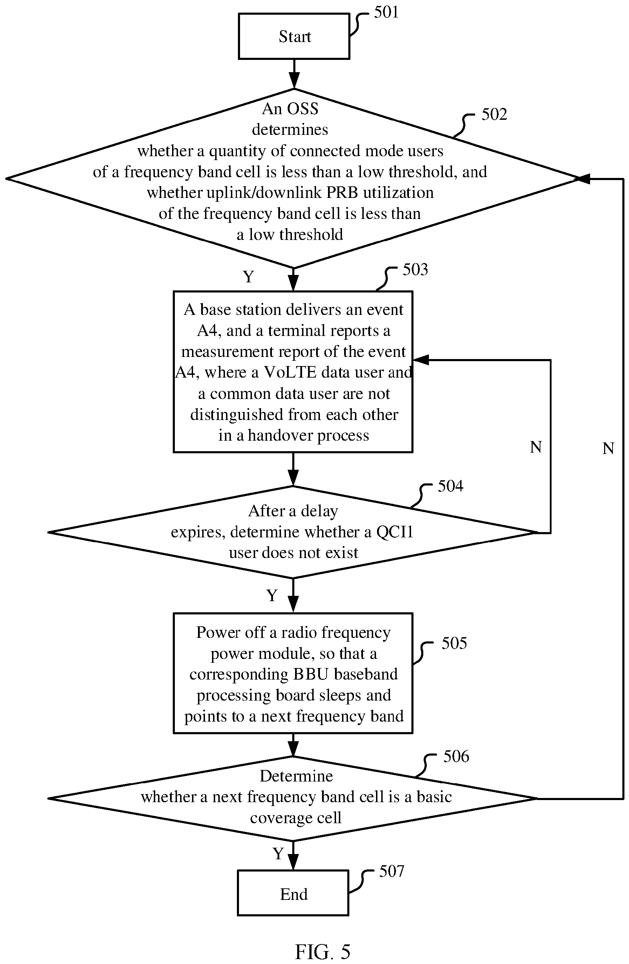

Referring to FIG. 5, another embodiment of a base station control method in an embodiment of this application includes:

501. Start.

502. An OSS determines whether a quantity of connected mode users of a frequency band cell is less than a low threshold, and whether uplink/downlink PRB utilization of the frequency band cell is less than a low threshold; and performs step 503 if the quantity of connected mode users of the frequency band cell is less than the low threshold and the uplink/downlink PRB utilization of the frequency band cell is less than the low threshold.

In this embodiment, an example in which a quantity of connected mode users and uplink/downlink PRB utilization of a frequency band cell of a current base station are used as KPI data of a current frequency band cell is used for description, to compare the quantity of connected mode users and the uplink/downlink PRB utilization with a preset low threshold. If the quantity of connected mode users and the uplink/downlink PRB utilization are both lower than the low threshold, the OSS determines that the current frequency band cell is a cell in a low bearing capacity state, and performs the subsequent step 503. If the quantity of connected mode users and the uplink/downlink PRB utilization are not lower than the low threshold, the OSS may not perform another action, or may periodically continuously perform a determining process in step 502. This is not limited herein. In addition, similar to the content described in the foregoing embodiment, the low threshold may be set by using experience of an on-site working person. Alternatively, the low threshold may be determined in an AI self-learning manner, or may be determined in another manner. This is not limited herein.

503. The base station delivers an event A4, and a terminal reports a measurement report of the event A4. In a handover process, a voice over long term evolution (VOLTE, voice over long-term evolution) data user and a common data user are not distinguished from each other.

In this embodiment, the base station obtains the measurement report that is of the corresponding event A4 and that is reported by the terminal accessing the base station, and in step 502, when the frequency band corresponds to a network frequency band of a long term evolution (LTE, long term evolution), the VoLTE data user and the common data user are not distinguished from each other herein. The event A4 is one of handover events in LTE, that is, if a reference signal received power (RSRP, reference signal receiving power) value that is of an inter-frequency neighboring cell and that is measured by the terminal is greater than the threshold, the UE starts a handover to the inter-frequency neighboring cell.

504. After a delay expires, determine whether a QCI1 user does not exist; and perform step 505 if the QCI1 user does not exist; or return to perform step 503 if the QCI1 user exists.

In this embodiment, the OSS sets specified delay duration to obtain, by using the base station, the measurement report that is of the corresponding event A4 and that is reported by the terminal accessing the base station. When the specified delay duration expires, for example, the OSS may determine, by using the measurement report of the event A4, whether a user with a scale value (QCI, QoS class identifier) 1 exists; and subsequently perform step 505 if the user with the scale value 1 exists; or return to perform step 503 if the user with the scale value 1 does not exist. The process herein corresponds to the implementation process, in step 403 in the embodiment in FIG. 4, in which the OSS determines whether the terminal connected to the first base station unit meets the preset condition. To be specific, if the terminal accessing the first base station unit has a QCI1 user, the terminal connected to the first base station unit does not meet the preset condition; or if the terminal connected to the first base station unit does not have a QCI1 user, the terminal connected to the first base station unit meets the preset condition. It should be noted that, in this embodiment, whether QCI1 exists is only used as an example to describe whether the terminal meets the preset condition. In the implementation process of the solution, whether the terminal meets the preset condition may be determined by using another QCI value or another terminal parameter. This is not limited herein.

505. Power off a radio frequency power module, so that a corresponding BBU baseband processing board sleeps and points to a next frequency band.

In this embodiment, when determining, in step 504, that the QCI1 user does not exist, the OSS powers off the radio frequency power module, so that the corresponding BBU baseband processing board sleeps and points to the next frequency band. In other words, the OSS performs power-off or sleep processing on a frequency band cell currently in the low bearing capacity state. Subsequently, the OSS may further perform a determining operation on a next neighboring frequency band of the current frequency band cell. The process corresponds to the process in step 404 to step 406 in the embodiment shown in FIG. 4.

506. Determine whether the next frequency band is a basic coverage frequency band; perform step 507 if the next frequency band is a basic coverage frequency band; or perform step 502 if the next frequency band is not a basic coverage frequency band.

In this embodiment, the OSS determines whether the next neighboring frequency band cell of the current frequency band cell in step 505 is a cell corresponding to a basic coverage frequency band of the base station; and performs step 507 if the next neighboring frequency band cell of the current frequency band cell in step 505 is the cell corresponding to the basic coverage frequency band of the base station; or repeatedly executes an execution process in step 502 to step 506 for the cell if the next neighboring frequency band cell of the current frequency band cell in step 505 is not the cell corresponding to the basic coverage frequency band of the base station. Therefore, the OSS may traverse all base station units in the base station, to further reduce power consumption of the base station. In addition, a specified frequency band is generally set as a basic coverage frequency band in the base station. When the second base station unit corresponds to the basic coverage frequency band, the OSS may not control the second base station unit to enter the second state, so that a basic access capability of the base station can be maintained.

507. End.

2. Control a base station unit in the base station to adjust from the second state to the first state.

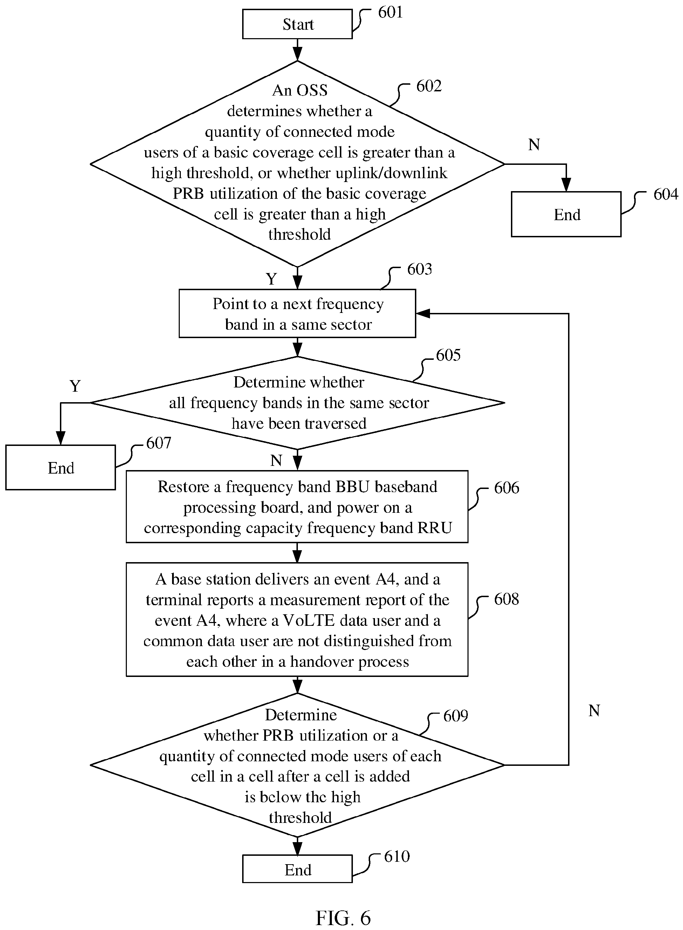

Referring to FIG. 6, another embodiment of a base station control method in an embodiment of this application includes:
601. Start.

602. An OSS determines whether a quantity of connected mode users of a basic coverage cell is greater than a high threshold, or whether uplink/downlink PRB utilization of the basic coverage cell is greater than a high threshold; and performs step 603 if the quantity of connected mode users of the basic coverage cell is greater than the high threshold or the uplink/downlink PRB utilization of the basic coverage cell is greater than the high threshold; or performs step 604 if the quantity of connected mode users of the basic coverage cell is not greater than the high threshold or the uplink/downlink PRB utilization of the basic coverage cell is not greater than the high threshold.

In this embodiment, an example in which the quantity of connected mode users and the uplink/downlink PRB utilization of the basic coverage cell are used as KPI data of a current frequency band cell is used for description, to compare the quantity of connected mode users and the uplink/downlink PRB utilization with a preset low threshold. If the quantity of connected mode users and the uplink/downlink PRB utilization are both greater than the high thresholds, the OSS determines that the current frequency band cell is a cell in a high bearing capacity state, and performs the subsequent step 603. If the quantity of connected mode users and the uplink/downlink PRB utilization are not greater than the high thresholds, the OSS may perform step 604, or may periodically continuously perform a determining process in step 602. This is not limited herein.

It should be noted that, in this embodiment, that the current frequency band cell is a cell corresponding to a basic coverage frequency band is only used as an example for description. Clearly, in step 602, a quantity of connected mode users and uplink/downlink PRB utilization of a cell corresponding to any frequency band in a base station may be used for determining. This is not limited herein.

603. Point to a next frequency band in a same sector.

In this embodiment, when the OSS determines, in step 602, that the basic coverage cell is a cell in the high bearing capacity state, that is, when a bearing pressure of the basic coverage cell is excessively high, the OSS may further perform a determining operation on a next neighboring frequency band of the current frequency band cell. The process corresponds to the process in step 407 to step 409 in the embodiment in FIG. 4.

604. End.

605. Determine whether all frequency bands in the same sector have been traversed; and perform step 607 if all the frequency bands in the same sector have been traversed; or perform step 606 if not all the frequency bands in the same sector have been traversed.

In this embodiment, the OSS determines whether all the frequency bands in the same sector in the base station have been traversed and searched; and if all the frequency bands in the same sector in the base station have been traversed and searched, the OSS determines that there is a base station unit in a power-off state or a sleep state in the same sector, and performs step 607; or if not all the frequency bands in the same sector in the base station have been traversed and searched, the OSS performs step 606.

606. Restore a frequency band BBU baseband processing board, and power on a corresponding capacity frequency band RRU.

In this embodiment, the OSS powers on or wakes up the base station unit that is already in the power-off state or the sleep state in the same sector, so that the bearing pressure of the basic coverage cell is reduced, and power supply control on the base station is further optimized.

607. End.

608. The base station delivers an event A4, and a terminal reports a measurement report of the event A4, where in a handover process, a VoLTE data user and a common data user are not distinguished from each other.

In this embodiment, an execution process in step 608 is similar to the execution process in step 503, and details are not described herein again.

609. Determine whether PRB utilization or a quantity of connected mode users of each cell after a cell is added is below the high threshold; and perform step 610 if the PRB utilization or the quantity of connected mode users of each cell after the cell is added is below the high threshold; or perform step 603 if the PRB utilization or the quantity of connected mode users of each cell after the cell is added is not below the high threshold.

In this embodiment, the OSS determines whether KPI data (including PRB utilization or a UE quantity of connected mode users of a cell) of each cell is below the high threshold after powering on or waking up, in step 606, the base station unit that is already in the power-off state or the sleep state in the same sector; and performs step 610 if the KPI data of each cell is below the high threshold; or performs step 603 if the KPI data of each cell is not less than the high threshold. Therefore, the OSS may traverse all base station units in the base station, that is, when there is a base station unit whose bearing capacity is excessively high in the base station, the OSS may control another base station unit to enter a power-on state or a wake-up state, to share running corresponding to the bearing capacity.

610. End.

It should be noted that, for specific content such as information exchange and execution processes in embodiments corresponding to FIG. 5 and FIG. 6, refer to the descriptions in the foregoing method embodiment shown in FIG. 4 in this application. Details are not described herein again.

The foregoing describes a power exchange control method implemented by using the operations support system OSS. With reference to the accompanying drawings, the following describes the operations support system OSS provided in embodiments of this application.

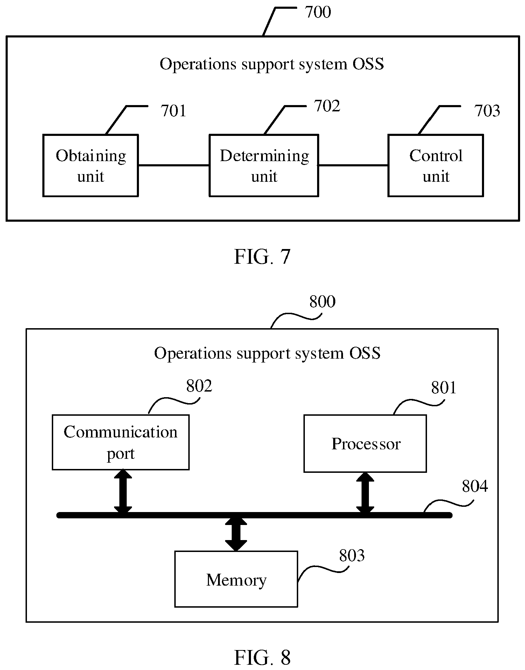

Referring to FIG. 7, an operations support system OSS 700 provided in an embodiment of this application includes:
an obtaining unit 701, configured to obtain first running data of a first base station unit in a base station, where the first base station unit is in a first state, and the first state includes a power-on state or a wake-up state;
a determining unit 702, configured to determine, based on the first running data, whether the first base station unit is in a low bearing capacity state; and
a control unit 703, configured to: when the determining unit determines that the first base station unit is in the low bearing capacity state, control the first base station unit to enter a second state, where the second state includes a power-off state or a sleep state.

In a preferred implementation, the first running data includes key performance indicator KPI data of the first base station unit, and the determining unit 702 is specifically configured to:
determine whether the KPI data is lower than a first preset threshold; and
if the KPI data is lower than the first preset threshold, determine that the first base station unit is in the low bearing capacity state; or
if the KPI data is not lower than the first preset threshold, determine that the first base station unit is not in the low bearing capacity state.

In a preferred implementation, the first running data includes a power supply parameter of the first base station unit, and the determining unit 702 is specifically configured to:
determine whether the power supply parameter is lower than a second preset threshold; and
if the power supply parameter is lower than the second preset threshold, determine that the first base station unit is in the low bearing capacity state; or
if the power supply parameter is not lower than the second preset threshold, determine that the first base station unit is not in the low bearing capacity state.

In a preferred implementation, the determining unit 702 is further configured to:
determine whether a terminal connected to the first base station unit meets a preset condition; and
if the terminal connected to the first base station unit meets the preset condition, trigger the step of controlling the first base station unit to enter a second state.

In a preferred implementation, the base station further includes a second base station unit in the first state;
the obtaining unit 701 is further configured to obtain second running data of the second base station unit;
the determining unit 702 is further configured to determine, based on the second running data, whether the second base station unit is in the low bearing capacity state; and
the control unit 703 is further configured to: when the determining unit determines that the second base station unit is in the low bearing capacity state, control the second base station unit to enter the second state.

In a preferred implementation, the base station further includes a third base station unit in the first state;
the obtaining unit 701 is further configured to obtain third running data of the third base station unit;
the determining unit 702 is further configured to determine, based on the third running data, whether the third base station unit is in a high bearing capacity state; and
the control unit 703 is further configured to: when the determining unit determines that the second base station unit is in the low bearing capacity state, control the first base station unit to enter the first state.

It should be noted that, for specific content such as information exchange between units of the OSS 700 and execution processes of the units, refer to the descriptions in the foregoing method embodiments of this application. Details are not described herein again.

FIG. 8 is a schematic diagram of a possible logical structure of an OSS 800 in the foregoing embodiment according to an embodiment of this application. The controller 800 includes a processor 801, a communication port 802, a memory 803, and a bus 804. The processor 801, the communication port 802, and the memory 803 are connected to each other by using the bus 804. In this embodiment of this application, the processor 801 is configured to perform control processing on an action of the controller 800. For example, the processor 801 is configured to perform functions performed by the determining unit 702 and the control unit 703 in FIG. 8. The communication port 802 is configured to: perform a function performed by the obtaining unit 701 in FIG. 8, and support the controller 800 in communicating. The memory 803 is configured to store program code and data of the controller 800.

The processor 801 may be a central processing unit, a general-purpose processor, a digital signal processor, an application-specific integrated circuit, a field programmable gate array or another programmable logical device, a transistor logical device, a hardware component, or any combination thereof. The processor may implement or execute various example logical blocks, modules, and circuits that are described with reference to content disclosed in this application. Alternatively, the processor may be a combination of processors implementing a computing function, for example, a combination of one or more microprocessors, or a combination of a digital signal processor and a microprocessor. The bus 804 may be a peripheral component interconnect (Peripheral Component Interconnect, PCI) bus, an extended industry standard architecture (Extended Industry Standard Architecture, EISA) bus, or the like. The bus may be classified into an address bus, a data bus, a control bus, and the like. For ease of representation, only one bold line is used to represent the bus in FIG. 8, but this does not mean that there is only one bus or only one type of bus.

An embodiment of this application further provides a computer-readable storage medium that stores one or more computer-executable instructions. When the computer-executable instructions are executed by the processor, the processor performs the foregoing power exchange control method.

An embodiment of this application further provides a computer program product that stores one or more computer-executable instructions. When the computer-executable instructions are executed by a processor, the processor performs the foregoing power exchange control method.

This application further provides a chip system. The chip system includes a processor configured to support a controller in implementing the function in the foregoing power exchange control method. In a possible design, the chip system may further include a memory. The memory is configured to store necessary program instructions and data. The chip system may include a chip, or may include a chip and another discrete component.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

In the several embodiments provided in this application, it should be understood that the disclosed system, apparatus, and method may be implemented in other manners. For example, the described apparatus embodiment is merely an example. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or the units may be implemented in electronic, mechanical, or other forms.

The units described as separate components may or may not be physically separate, and parts displayed as units may or may not be physical units. To be specific, the parts may be located in one position, or may be distributed on a plurality of network units. Some or all of the units may be selected based on actual requirements to achieve the objectives of the solutions of the embodiments.

In addition, functional units in embodiments of this application may be integrated into one processing unit, or each of the units may exist alone physically, or two or more units may be integrated into one unit. The integrated unit may be implemented in a form of hardware, or may be implemented in a form of a software function unit.

When the integrated unit is implemented in the form of a software functional unit and sold or used as an independent product, the integrated unit may be stored in a computer-readable storage medium. Based on such an understanding, the technical solutions of this application essentially, or the part contributing to the conventional technology, or all or some of the technical solutions may be implemented in the form of a software product. The computer software product is stored in a storage medium and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

## Claims

1. A base station control method, comprising:
obtaining, by an operations support system OSS, first running data of a first base station unit in a base station, wherein the first base station unit is in a first state, and the first state comprises a power-on state or a wake-up state;
determining, by the OSS based on the first running data, whether the first base station unit is in a low bearing capacity state; and
if the first base station unit is in the low bearing capacity state, controlling, by the OSS, the first base station unit to enter a second state, wherein the second state comprises a power-off state or a sleep state.

2. The method according to claim 1, wherein the first running data comprises key performance indicator KPI data of the first base station unit, and the determining, by the OSS based on the first running data, whether the first base station unit is in a low bearing capacity state comprises:
determining, by the OSS, whether the KPI data is lower than a first preset threshold; and
if the KPI data is lower than the first preset threshold, determining, by the OSS, that the first base station unit is in the low bearing capacity state; or
if the KPI data is not lower than the first preset threshold, determining, by the OSS, that the first base station unit is not in the low bearing capacity state.

3. The method according to claim 1, wherein the first running data comprises a power supply parameter of the first base station unit, and the determining, by the OSS based on the first running data, whether the first base station unit is in a low bearing capacity state comprises:
determining, by the OSS, whether the power supply parameter is lower than a second preset threshold; and
if the power supply parameter is lower than the second preset threshold, determining, by the OSS, that the first base station unit is in the low bearing capacity state; or
if the power supply parameter is not lower than the second preset threshold, determining, by the OSS, that the first base station unit is not in the low bearing capacity state.

4. The method according to any one of claims 1 to 3, wherein when the OSS determines that the first base station unit is in the low bearing capacity state, the method further comprises:
determining, by the OSS, whether a terminal connected to the first base station unit meets a preset condition; and
if the terminal connected to the first base station unit meets the preset condition, triggering, by the OSS, the step of controlling the first base station unit to enter a second state.

5. The method according to any one of claims 1 to 3, wherein the base station further comprises a second base station unit in the first state, and after the controlling, by the OSS, the first base station unit to enter a second state, the method further comprises:
obtaining, by the OSS, second running data of the second base station unit;
determining, by the OSS based on the second running data, whether the second base station unit is in the low bearing capacity state; and
if the second base station unit is in the low bearing capacity state, controlling, by the OSS, the second base station unit to enter the second state.

6. The method according to any one of claims 1 to 3, wherein the base station further comprises a third base station unit in the first state, and after the controlling, by the OSS, the first base station unit to enter a second state, the method further comprises:
obtaining, by the OSS, third running data of the third base station unit;
determining, by the OSS based on the third running data, whether the third base station unit is in a high bearing capacity state; and
if the third base station unit is in the high bearing capacity state, controlling, by the OSS, the first base station unit to enter the first state.

7. An operations support system OSS, comprising:
an obtaining unit, configured to obtain first running data of a first base station unit in a base station, wherein the first base station unit is in a first state, and the first state comprises a power-on state or a wake-up state;
a determining unit, configured to determine, based on the first running data, whether the first base station unit is in a low bearing capacity state; and
a control unit, configured to: when the determining unit determines that the first base station unit is in the low bearing capacity state, control the first base station unit to enter a second state, wherein the second state comprises a power-off state or a sleep state.

8. The OSS according to claim 7, wherein the first running data comprises key performance indicator KPI data of the first base station unit, and the determining unit is specifically configured to:
determine whether the KPI data is lower than a first preset threshold; and
if the KPI data is lower than the first preset threshold, determine that the first base station unit is in the low bearing capacity state; or
if the KPI data is not lower than the first preset threshold, determine that the first base station unit is not in the low bearing capacity state.

9. The OSS according to claim 7, wherein the first running data comprises a power supply parameter of the first base station unit, and the determining unit is specifically configured to:
determine whether the power supply parameter is lower than a second preset threshold; and
if the power supply parameter is lower than the second preset threshold, determine that the first base station unit is in the low bearing capacity state; or
if the power supply parameter is not lower than the second preset threshold, determine that the first base station unit is not in the low bearing capacity state.

10. The OSS according to any one of claims 7 to 9, wherein the determining unit is further configured to:
determine whether a terminal connected to the first base station unit meets a preset condition; and
if the terminal connected to the first base station unit meets the preset condition, trigger the step of controlling the first base station unit to enter a second state.

11. The OSS according to any one of claims 7 to 9, wherein the base station further comprises a second base station unit in the first state;
the obtaining unit is further configured to obtain second running data of the second base station unit;
the determining unit is further configured to determine, based on the second running data, whether the second base station unit is in the low bearing capacity state; and
the control unit is further configured to: when the determining unit determines that the second base station unit is in the low bearing capacity state, control the second base station unit to enter the second state.

12. The OSS according to any one of claims 7 to 9, wherein the base station further comprises a third base station unit in the first state;
the obtaining unit is further configured to obtain third running data of the third base station unit;
the determining unit is further configured to determine, based on the third running data, whether the third base station unit is in a high bearing capacity state; and
the control unit is further configured to: when the determining unit determines that the second base station unit is in the low bearing capacity state, control the first base station unit to enter the first state.

13. A distributed base station system DBS, comprising:
a power supply, a base station, and an operations support system OSS, wherein the base station comprises a first base station unit, the first base station unit is in a first state, and the first state comprises a power-on state or a wake-up state;
the power supply is connected to the first base station unit, and is configured to supply power to the first base station unit; and
the OSS is separately connected to the power supply and the first base station unit, and is configured to: when determining, based on running data of the first base station unit, that the first base station unit is in a low bearing capacity state, control a power supply state of the power supply supplying power to the first base station unit to enter a second state, wherein the second state comprises a power-off state or a sleep state.

14. The system according to claim 13, wherein the base station further comprises a second base station unit in the first state;
the power supply is connected to the second base station unit, and is configured to supply power to the second base station unit; and
the OSS is connected to the second base station unit, and is configured to: after controlling the power supply state of the power supply supplying power to the first base station unit to enter the second state, when determining, based on running data of the second base station unit, that the second base station unit is in the low bearing capacity state, control a power supply state of the power supply supplying power to the second base station unit to enter the second state.

15. The system according to claim 13, wherein the base station further comprises a third base station unit in the first state;
the power supply is connected to the third base station unit, and is configured to supply power to the third base station unit; and
the OSS is connected to the third base station unit, and is configured to: after controlling the power supply state of the power supply supplying power to the first base station unit to enter the second state, when determining, based on running data of the third base station unit, that the third base station unit is in a high bearing capacity state, control the power supply state of the power supply supplying power to the first base station unit to enter the first state.

16. The system according to any one of claims 13 to 15, wherein the first running data of the first base station unit comprises key performance indicator KPI data of the first base station unit and/or a power supply parameter of the first base station unit.

17. A computer program product comprising instructions, wherein when the computer program product is run on a computer, the computer is enabled to perform the method according to any one of claims 1 to 6.

18. A computer-readable storage medium, wherein the computer-readable storage medium is configured to store program instructions, and when the program instructions are run on a computer, the computer is enabled to perform the method according to any one of claims 1 to 6.
